# EUROPÄISCHE PATENTSCHRIFT

(11) **EP 3 707 058 B1**
(45) Veröffentlichungstag und Bekanntmachung des Hinweises auf die Patenterteilung: **02.03.2022**
(21) Anmeldenummer: 18807224.3
(22) Anmeldetag: 09.11.2018
(51) Int. Cl.: B62D 7/04, B62D 13/00

(54) **VERFAHREN ZUM LENKEN EINES FAHRZEUGES**
METHOD FOR STEERING A VEHICLE
PROCÉDÉ PERMETTANT DE DIRIGER UN VÉHICULE

(30) Priorität: 10.11.2017 DE 102017126481
(43) Veröffentlichungstag der Anmeldung: 16.09.2020
(73) Patentinhaber: SYN TRAC GmbH, 4822 Bad Goisern a.H. (AT)
(72) Erfinder: PUTZ, Stefan, 4822 Bad Goisern (AT)
(74) Vertreter: HGF
(86) Internationale Anmeldenummer: PCT/EP2018/080823
(87) Internationale Veröffentlichungsnummer: WO 2019/092210

(56) Entgegenhaltungen:
- WO-A1-2013/119109
- WO-A1-2015/060752
- DE-A1-102005 023 286

## Beschreibung

Die vorliegende Erfindung betrifft ein Verfahren zum Lenken eines Fahrzeuges.

Als Lenkung bezeichnet man eine Vorrichtung zur Beeinflussung der Fahrtrichtung von Fahrzeugen jeglicher Art.

In Bezug auf ein Fahrzeug gibt es verschiedene Lenkarten.

Die Zweiradlenkung ist die gängigste Form der Lenkung bei den meisten Straßenfahrzeugen, bei der die beiden Räder derselben Achse gelenkt werden.

Vorderachslenkung ist die übliche Lenkung bei den meisten Kraftfahrzeugen.

Hinterradlenkung wird oft an Spezialfahrzeugen wie Gabelstaplern oder Mähdreschern verwendet, weil andere Bauteile den Einbau vorne unmöglich machen.

Doppelvorderradlenkung wird die Lenkung auf zwei kurz hintereinander liegende Vorderachsen genannt. Diese Lenkung wird verwendet, um bei losem oder rutschigem Untergrund ein Untersteuern zu vermeiden und wird bei Spezialfahrzeugen verwendet. Ein weiterer Einbaugrund ist das Vermeiden von starkem Reifenverschleiß durch das typische "Radieren" von Doppelachsen während der Kurvenfahrt (Ackermann-Gesetz). Oft wird diese Lenkungsart mit Allradantrieb verbunden. Man findet sie zum Beispiel bei 3-achsigen Sattelzugschleppern, 4-achsigen Baustellen-Lkw und Schwerlast-Lkw.

Vorderradlenkung bei 3-achsigen Fahrzeugen besteht aus der lenkbaren Vorderachse und zwei eng stehenden Hinterachsen (Doppelachse). Unter Kurvenfahrt können die Hinterachsen nicht mit der Vorderachse auf einer Kreisbahn rollen, sondern bewegen sich schräg zu ihrer eigenen Rollrichtung. Sie radieren auf der Straße und zwingen dem Fahrzeug ein untersteuerndes Verhalten auf. Diese Lenkungsart wird üblicherweise bei Fahrzeugen mit großen Nutzlasten, Lkw und ihren Anhängern, verwendet.

Bei einer Allradlenkung können alle Räder eines Fahrzeugs gelenkt werden. Das ergibt einen kleinen Wenderadius und hat bei Allradantrieb einen weiteren Vorteil: Der Antrieb kann in die gelenkte Richtung erfolgen. Eine Allradlenkung wird unter anderem in landwirtschaftlichen Fahrzeugen oder bei Schwerlasttransportern verwendet. Man unterscheidet folgende Arten der Allradlenkung:
- Proportionallenkung, bei der die Hinterräder in einem bestimmten Verhältnis zu den Vorderrädern eingeschlagen werden, beispielsweise das Vorderrad bewegt sich um 2°, das Hinterrad entsprechend um 0,4°.
- Gleichlauflenkung, bei der die Vorder- und Hinterräder gleichmäßig verdreht werden, was zur Folge hat, dass die Hinterräder genau in der Spur der Vorderräder nachlaufen.
- Verzögerungslenkung, bei der die Hinterräder erst bei einem bestimmten Winkel der Vorderräder verdreht werden.
- Hundeganglenkung ist eine vor allem in der Landwirtschaft eingesetzte Lenkung. Dabei werden die Vorderräder und die Hinterräder in die gleiche Richtung verdreht. Das ergibt bei einer Geradeausfahrt eine zur Vorderachse versetzte Hinterachse. Dadurch wird der Boden geschont.
- Vorderrad-Hinterradlenkung wird bei 3-achsigen Nutzfahrzeugen mit einer doppelten Hinterachse verbaut. Bei ihr lenkt zusätzlich zur Vorderachse eine der beiden Hinterachsen mit. Ist die erste Hinterachse die Lenkachse so lenkt diese gleichsinnig zur Vorderachse. Die zweite Hinterachse würde dagegen gegensinnig zur Vorderachse einlenken. Da ein Radieren der Hinterachsen vermieden wird, ist das Fahrzeug damit wendiger und leichter zu handhaben. Anwendung vor allem bei schweren Lkw, die oft auf engem Terrain bewegt werden müssen (z. B. Müllwagen).

Aus der DE 10 2005 023 286 A1, welche die Merkmale des Oberbegriffs des unabhängigen Anspruchs offenbart, ist ein Verfahren zur Lenkungseinstellung und Anlenkung von gelenkten Rädern eines Fahrzeugs mit Achsschenkellenkung bekannt, durch welches sowohl bei einem Vierrad-Lenkmodus als auch bei einem Zweiradlenkmodus und bevorzugt auch bei beliebigen Zwischenmodi sowie bei Lenkmodi mit mehr als zwei gelenkten Achsen für alle diese Lenkmodi jeweils der Ackermannwinkel und gegebenenfalls eine gewünschte Lenkwinkelabweichung einstellbar ist . Das Verfahren sieht vor, dass ein Ackermann-Schnittpunkt durch einen Bediener oder eine Auswahl- und Steuerungsvorrichtung entlang der Fahrzeuglängsachse und/oder deren Verlängerung innerhalb eines durch den maximalen Lenkwinkel der Radachsen bestimmten Bereiches verschoben wird.

Aus der WO 2013/119109 A1 ist ein Fahrzeug mit einem Fahrzeugteil bekannt, das einen im Wesentlichen starr am Fahrzeug montierbaren Verbindungsrahmen und einen mit dem Verbindungsrahmen verbindbaren Transportrahmen aufweist, der mit mindestens zwei lenkbaren Rädern versehen ist. Es sind Steuermittel vorgesehen, die geeignet sind, die lenkbaren Räder des Fahrzeugteils relativ zu den Vorderrädern des Fahrzeugs gegenzulenken und den Lenkwinkel der lenkbaren Räder so einzustellen, dass eine imaginäre Achse durch die Drehwelle der lenkbaren Räder des Fahrzeugteils eine imaginäre Achse durch das linke Vorderrad des Fahrzeugs, eine imaginäre Achse durch das rechte Vorderrad des Fahrzeugs und eine imaginäre Achse durch die Hinterräder des Fahrzeugs am Schnittpunkt schneidet

Aus der WO 2015/060752 A1 ist ein Radlenkungssystem zur Steuerung eines Lenkwinkels eines zweiten Paares lenkbarer Räder eines Fahrzeugs bekannt, welches zum Transport einer Last geeignet ist. Das Fahrzeug umfasst mindestens ein erstes und ein zweites Paar lenkbarer Räder. Das Radlenkungssystem umfasst eine Lenkwinkelerfassungsvorrichtung zum Erfassen mindestens eines Fahrzeuglenkwinkels und ein Steuersystem, das konfiguriert ist, um eine Lenkgeometrie des Fahrzeugs zu bestimmen und den Lenkwinkel mindestens jedes zweiten Paares lenkbarer Räder auf der Grundlage des erfassten Lenkwinkels und der bestimmten Lenkgeometrie des Fahrzeugs zu steuern.

Aufgabe der vorliegenden Erfindung ist es, ein Verfahren zum Lenken eines Fahrzeuges, insbesondere eines multifunktionalen Zug- und Trägerfahrzeuges mit Anbaugerät bzw. ggf.

Anhänger bereitzustellen, das ein einfacheres und sichereres Betreiben und Lenken eines Fahrzeuges ermöglicht.

Diese Aufgabe wird durch die Merkmale des unabhängigen Patentanspruchs gelöst. Vorteilhafte Ausgestaltungen davon sind in den Unteransprüchen angegeben.

Die vorliegende Erfindung betrifft ein Verfahren zum Lenken eines Fahrzeuges. Ein entsprechendes Fahrzeug umfasst zumindest zwei lenkbare Achsen VA1 und HA1 mit je einem Winkelsensor, wobei eine Hinterachse HA1 in einem Allradlenkmodus synchron mit der Vorderachse VA1 gegenläufig mitgelenkt wird, wobei dies als 4x4-Lenksystem bezeichnet wird. Weiterhin umfasst das Fahrzeug eine Steuereinrichtung zum Einstellen der Lenkwinkel der Achsen auf Basis der von Winkelsensoren bereitgestellten Daten.

Weiterhin ist eine zweite lenkbare Hinterachse HA2 eines Anbaugerätes vorgesehen und mit dem Fahrzeug zerstörungsfrei lösbar verbindbar (Verfahren zum Lenken für ein 6x6-Fahrzeug mit zwei Hinterachsen), wobei die zweite lenkbare Hinterachse HA2 des Anbaugerätes einen Winkelsensor aufweist. Insbesondere ist vorgesehen, dass, wenn die zweite Hinterachse angekoppelt ist, die erste Vorderachse VA1 und die in Fahrtrichtung liegende hintere Achse HA2 im Allradlenkmodus synchron gelenkt werden, wobei ein Lenkwinkel der ersten Hinterachse HA1 automatisch entsprechend der Lenkstellung von VA1 und HA2 eingestellt wird, wobei dies als 6x6-Lenksystem mit zwei Hinterachsen bezeichnet wird.

Erfindungsgemäß ist vorgesehen, dass beim Ankoppeln der zweiten Hinterachse HA2 aus dem 4x4-Lenksystem automatisch ein 6x6-Lenksystem wird, so dass die beiden Hinterachsen HA1 und HA2 automatisch auf den Synchronisierungsmodus des 6x6-Lenksystems umstellen, und/oder dass beim Abkoppeln der zweiten Hinterachse HA2 aus dem 6x6-Lenksystem automatisch ein 4x4-Lenksystem wird, so dass die am Fahrzeug verbliebene Hinterachse HA1 automatisch auf den Synchronisierungsmodus des eingangs erläuterten 4x4-Lenksystems umstellt. Hierfür sind entsprechende Sensoren vorgesehen, die die Steuereinrichtung mit Daten versorgen, ob eine zweite Hinterachse angekoppelt oder abgekoppelt ist.

Weiterhin ist eine zweite lenkbare Vorderachse VA2 eines weiteren Anbaugerätes vorgesehen und mit dem Fahrzeug zerstörungsfrei lösbar verbindbar (Verfahren zum Lenken für ein 8x8-Fahrzeug mit zwei Hinter- und zwei Vorderachsen), wobei die zweite lenkbare Vorderachse VA2 des Anbaugerätes einen Winkelsensor aufweist, und wobei, wenn die zweite Hinterachse HA2 und die zweite Vorderachse VA2 angekoppelt sind, die zweite Vorderachse VA2 und die beiden Hinterachsen HA1 und HA2 der ersten Vorderachse VA1 nachgeführt werden, wobei dies als 8x8-Lenksystem mit zwei Vorder- und zwei Hinterachsen bezeichnet wird. Hierbei kann erfindungsgemäß vorgesehen sein, dass beim Ankoppeln der zweiten Vorderachse VA2 aus dem 6x6-Lenksystem automatisch ein 8x8-Lenksystem wird, so dass automatisch auf den Synchronisierungsmodus des 8x8-Lenksystems umgestellt wird, und/oder dass beim Abkoppeln der zweiten Vorderachse VA2 aus dem 8x8-Lenksystem automatisch ein 6x6-Lenksystem wird, so dass automatisch auf den Synchronisierungsmodus des erläuterten 6x6-Lenksystems umgestellt wird.

Die dafür notwendigen Daten, ob ein Fahrzeug an- oder abgekoppelt ist, werden von der Steuereinrichtung mittels entsprechender Sensoren erfasst und über Datenleitungen der Steuereinrichtung zur Verfügung gestellt.

Die Steuereinrichtung kann auf Basis von Daten den 4x4-Modus oder den 6x6-Modus oder den 8x8-Modus erkennen und automatisch auf den Synchronisierungsmodus des 4x4- oder des 6x6- oder des 8x8-Lenksystems umstellen.

An das 4x4-Fahrzeug oder an das 6x6-Fahrzeug mit zwei Hinterachsen oder an das 8x8-Fahrzeug mit zwei Hinterachsen und mit zwei Vorderachsen kann ein zweiachsiger Anhänger mit zwei Achsen AA1 und AA2 angekoppelt sein, die ebenfalls lenkbar ausgebildet sind und einen Winkelsensor aufweisen, wobei in die Kopplungseinrichtung ein weiterer Winkelsensor bzw. eine Winkelsensorvorrichtung integriert ist, der zum Bereitstellen von Steuersignalen zum Steuern der hinteren Achse ausgebildet ist.

Hierbei kann erfindungsgemäß vorgesehen sein, dass der Winkelsensor in der Anhängerkupplung statt dem Winkelsensor der Vorderachse VA1 ausgewählt wird, um die Achsen des Anhängers anzusteuern, so dass automatisch ein Gleichstand mit der ersten Vorderachse VA1 des Fahrzeuges und der lenkbaren Anhängerachse(n) AA1 und AA2 hergestellt wird, so dass der Anhänger automatisch synchron mit der Vorderachse VA1 mitgelenkt wird. Weiterhin kann erfindungsgemäß ein Verfahren zum Lenken für ein 6x6-Fahrzeug mit zwei Hinterachsen und einem zweiachsigen Anhänger vorgesehen sein, das Verfahren zum Lenken erfolgt dabei entsprechend des anhand des 4x4-Lenksystems beschriebenen Prinzips. Weiterhin kann erfindungsgemäß auch ein Fahrzeug mit acht lenkbaren Achsen vorgesehen sein, das entsprechend einen zweiachsigen Anhänger mit zwei lenkbaren Achsen AA1, AA2 zieht. Die vorstehend genannten Lenkungslogiken bzw. Verfahren zum Lenken lassen sich darauf analog übertragen.

Die vorliegende Erfindung wird anhand der Figuren näher erläutert. Diese zeigen in:
- Figur 1:: eine schematische Darstellung einer bekannten 4x4-Lenkungslogik,
- Figur 2:: eine schematische Darstellung einer 6x6-Lenkungslogik mit zwei Hinterachsen,
- Figur 3:: eine schematische Darstellung einer weiteren 6x6-Lenkungslogik mit zwei Hinterachsen,
- Figur 4:: eine schematische Darstellung einer 8x8-Lenkungslogik,
- Figur 5:: eine schematische Darstellung einer 4x4-Lenkungslogik mit einem zweiachsigen Anhänger,
- Figur 6:: eine 6x6-Lenkungslogik mit zwei Hinterachsen mit einem zweiachsigen Anhänger, und
- Figur 7:: eine schematische Darstellung einer 8x8-Lenkungslogik mit zweiachsigem Anhänger.

Im Folgenden wird eine erfindungsgemäße Lenkungslogik beispielhaft anhand mehrerer Ausführungsbeispiele beschrieben, die die folgenden unterschiedlichen Lenkbetriebe unterscheiden.

Dies sind ein Vorderachslenkbetrieb, ein Allradlenkbetrieb, ein Hundeganglenkbetrieb, ein Synchronlenkbetrieb sowie ganz allgemein ein Lenkbetrieb zum Lenken der Achsen. Definitionen dieser unterschiedlichen Lenkbetriebe sind in der Beschreibungseinleitung erwähnt auf die hiermit vollinhaltlich Bezug genommen wird.

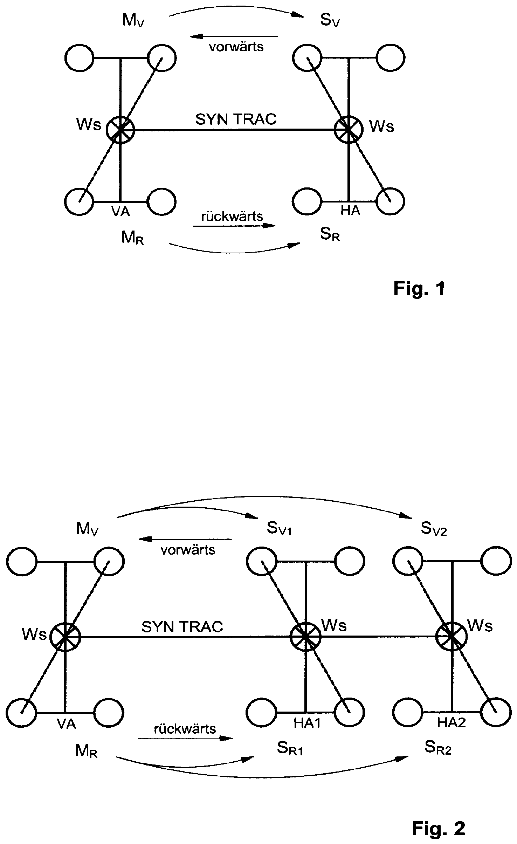

Zunächst wird die erfindungsgemäße Lenkungslogik anhand eines Fahrzeugs mit oder ohne Allradantrieb mit zwei lenkbaren Achsen erläutert (Figur 1).

Weiterhin kann das Fahrzeug mit Allradantrieb und/oder mit Hinterradantrieb ausgestattet sein. Es handelt sich somit dabei um ein 4x4-Lenksystem. Wie vorstehend erläutert, sind beide Achsen, das bedeutet, sowohl eine Vorderachse als auch eine Hinterachse, mit einem Winkelsensor versehen.

In einer Fahrtrichtung wird eine Vorderachse im Rahmen der vorliegenden Erfindung als Master bezeichnet und wobei diese direkt mit dem Lenkrad bzw. einer entsprechenden Lenkeinrichtung im Führerstand verbunden ist.

Die Hinterachse wird in einem Allradlenkmodus synchron mit der Vorderachse gegenläufig mitgelenkt.

Auf diese Weise ist es möglich, einen äußerst kleinen Wendekreis zu erzielen im Vergleich mit einem Fahrzeug, bei dem lediglich ein Lenken der Vorderachse möglich ist. Ein derartiges Verfahren zum Lenken ist bereits aus dem Stand der Technik bekannt.

Ein solcher Betrieb ist insbesondere bei Schneeräumarbeiten vorteilhaft, da die Hinterräder exakt in der Spur der Vorderräder nachgeführt werden und somit nicht auf einem Schneeräumkegel fahren, sondern in einer bereits vorgepressten Fahrrinne.

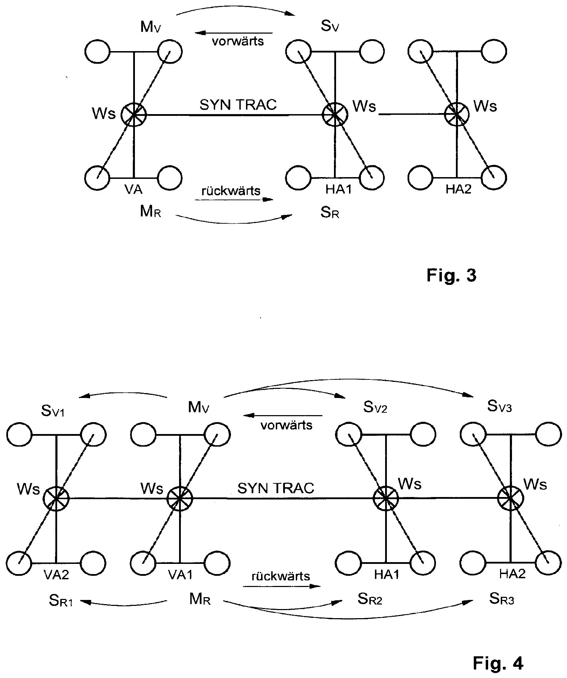

Weiterhin kann das erfindungsgemäße Fahrzeug eine lenkbare Vorderachse sowie zwei lenkbare Hinterachsen aufweisen. Dies wird im Rahmen der vorliegenden Erfindung als ein Verfahren zum Lenken für ein 6x6-Fahrzeug mit zwei Hinterachsen bezeichnet (Figuren 2 und 3).

Somit ist eine zweite lenkbare Hinterachse HA2 eines Anbaugerätes vorgesehen und mit dem Fahrzeug zerstörungsfrei lösbar verbindbar (Verfahren zum Lenken für ein 6x6-Fahrzeug mit zwei Hinterachsen), wobei die zweite lenkbare Hinterachse HA2 des Anbaugerätes einen Winkelsensor aufweist. Insbesondere ist vorgesehen, dass wenn die zweite Hinterachse angekoppelt ist, die erste Vorderachse VA1 und die in Fahrtrichtung liegende hintere Achse HA2 im Allradlenkmodus synchron gelenkt werden, wobei ein Lenkwinkel der ersten Hinterachse HA1 automatisch entsprechend der Lenkstellung von VA1 und HA2 eingestellt wird, wobei dies als 6x6-Lenksystem mit zwei Hinterachsen bezeichnet wird.

Erfindungsgemäß ist vorgesehen, dass beim Ankoppeln der zweiten Hinterachse HA2 aus dem 4x4-Lenksystem automatisch ein 6x6-Lenksystem wird, so dass die beiden Hinterachsen HA1 und HA2 automatisch auf den Synchronisierungsmodus des 6x6-Lenksystems umstellen, und dass beim Abkoppeln der zweiten Hinterachse HA2 aus dem 6x6-Lenksystem automatisch wieder ein 4x4-Lenksystem wird, so dass die am Fahrzeug verbliebene Hinterachse HA1 automatisch auf den Synchronisierungsmodus des Eingangs erläuterten 4x4-Lenksystems umstellt. Hierfür sind entsprechende Sensoren vorgesehen, die die Steuereinrichtung mit Daten versorgen, ob eine zweite Hinterachse angekoppelt oder abgekoppelt ist.

Dabei sind, wie vorstehend erläutert, alle drei Achsen VA, HA1 und HA2 jeweils mit einem Winkelsensor ausgestattet und lenkbar ausgebildet.

Dabei werden in der Regel die erste Vorderachse und die in Fahrtrichtung liegende hintere Achse HA2 im Allradlenkmodus synchron gelenkt. Die zweite Achse bzw. die erste Hinterachse HA1 stellt automatisch den richtigen Lenkwinkel dazu ein.

Die erfindungsgemäße Lenkungslogik für ein 6x6-Fahrzeug mit zwei Hinterachsen zeichnet sich dadurch aus, dass beim erfindungsgemäßen Fahrzeug die Möglichkeit besteht, das Anbaugerät bzw. die zweite Hinterachse abzukoppeln, da diese mit dem Fahrzeug über eine entsprechende Dockingaufnahme und einen entsprechenden Dockingeinschub verbunden ist. Durch das Abkoppeln der zweiten Hinterachse wird plötzlich aus einem 6x6- ein 4x4-Lenksystem. Gemäß dem erfindungsgemäßen Verfahren ist vorgesehen, dass die am Fahrzeug verbliebene Hinterachse HA1 automatisch auf den Synchronisierungsmodus des eingangs erläuterten 4x4-Lenksystems umstellt.

Dies ist erfindungsgemäß selbstverständlich auch in umgekehrter Reihenfolge bei Kopplung einer zweiten Hinterachse HA2 eines Anbaugerätes mit dem erfindungsgemäßen Fahrzeug möglich. Über entsprechende Datenleitungen erkennt das System den 6x6-Modus und stellt auf den Synchronisierungsmodus des 6x6-Lenksystems um.

Weiterhin ist erfindungsgemäß ein Verfahren zum Lenken für ein Fahrzeug mit vier Achsen vorgesehen. Dies wird im Rahmen der vorliegenden Erfindung als ein Verfahren zum Lenken für ein 8x8-Fahrzeug bezeichnet (Figur 4)

Dabei ist eine zweite lenkbare Vorderachse VA2 eines weiteren Anbaugerätes vorgesehen, welche mit dem Fahrzeug zerstörungsfrei lösbar verbindbar ist, wobei die zweite lenkbare Vorderachse VA2 des Anbaugerätes einen Winkelsensor aufweist, und wobei, wenn die zweite Hinterachse HA2 und die zweite Vorderachse VA2 angekoppelt sind, die zweite Vorderachse VA2 und die beiden Hinterachsen HA1 und HA2 der ersten Vorderachse VA1 nachgeführt werden, wobei dies als 8x8-Lenksystem mit zwei Vorder- und zwei Hinterachsen bezeichnet wird.

Hierbei ist erfindungsgemäß vorgesehen, dass beim Ankoppeln der zweiten Vorderachse VA2 aus dem 6x6-Lenksystem automatisch ein 8x8-Lenksystem wird, so dass automatisch auf den Synchronisierungsmodus des 8x8-Lenksystems umgestellt wird, und/oder dass beim Ankoppeln der zweiten Vorderachse VA2 aus dem 8x8-Lenksystem automatisch ein 6x6-Lenksystem wird, so dass automatisch auf den Synchronisierungsmodus des erläuterten 6x6-Lenksystems umgestellt wird.

Die dafür notwendigen Daten, ob ein Fahrzeug an- oder abgekoppelt ist, werden der Steuereinrichtungmittels entsprechender Sensoren erfasst und über Datenleitungen der Steuereinrichtung zur Verfügung gestellt.

Die Steuereinrichtung kann auf Basis von Daten den 4x4-Modus oder den 6x6-Modus oder den 8x8-Modus erkennen und automatisch auf den Synchronisierungsmodus des 4x4- oder des 6x6- oder des 8x8-Lenksystems umstellen.

Dabei sind wieder alle vier Achsen VA1, VA2, HA1 und HA2 jeweils mit einem Winkelsensor ausgestattet und können gelenkt werden. Alle anderen Achsen FA2, HA1 und HA2 werden dem Master nachgeführt.

Bei diesem erfindungsgemäßen Fahrzeug ist vorgesehen, dass die zweite Vorderachse VA2 und die zweite Hinterachse HA2 abgekoppelt werden können. Dies sind beispielsweise wieder Achsen eines entsprechenden Anbaugerätes.

Hierbei ist erfindungsgemäß erneut vorgesehen, dass das Lenksystem beispielsweise beim Abkoppeln einer oder beider Achsen erneut von einem 8x8- auf ein 6x6- oder ein 4x4-Lenksystem umstellt.

Ein automatisches Andocken von jeweils einer Vorderachse und einer Hinterachse (also in Summe vier Achsen) kann automatisch über ein Dockingsystem realisiert werden.

Zusätzliche Anhänger an einem 8x8 System können nur durch händisches An-/Abhängen realisiert werden.

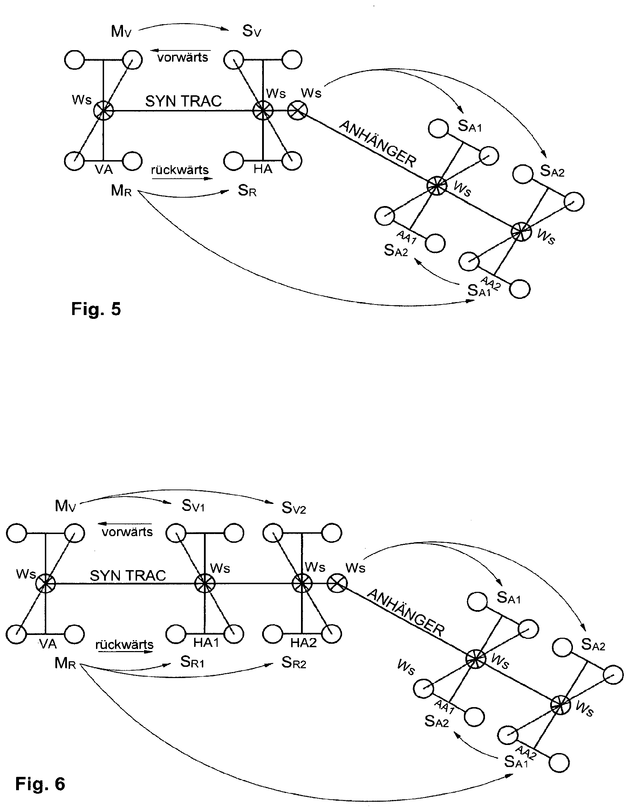

Im Folgenden wird ein Verfahren zum Lenken eines 4x4-Fahrzeuges mit einem zweiachsigen Anhänger beschrieben. Dies wird im Rahmen der vorliegenden Erfindung als ein Verfahren zum Lenken für ein 4x4-Fahrzeug mit Anhänger bezeichnet (Figur 5).

An das 4x4-Fahrzeug oder an das 6x6-Fahrzeug mit zwei Hinterachsen oder an das 8x8-Fahrzeug mit zwei Hinterachsen und mit zwei Vorderachsen ist ein zweiachsiger Anhänger mit zwei Achsen AA1 und AA2 angekoppelt, die ebenfalls lenkbar ausgebildet sind und einen Winkelsensor aufweisen, wobei in die Kopplungseinrichtung ein weiterer Winkelsensor bzw. eine Winkelsensorvorrichtung integriert ist, der zum Bereitstellen von Steuersignalen zum Steuern der hinteren Achse ausgebildet ist (Figur 5 und 6).

Hierbei kann erfindungsgemäß vorgesehen sein, dass der Winkelsensor in der Anhängerkupplung statt dem Winkelsensor der Vorderachse VA1 ausgewählt wird, um die Achsen des Anhängers anzusteuern, so dass automatisch ein Gleichstand mit der ersten Vorderachse VA1 des Fahrzeuges und der lenkbaren Anhängerachse(n) AA1 und AA2 hergestellt wird, so dass der Anhänger automatisch synchron mit der Vorderachse VA1 mitgelenkt wird.

Dabei ist in eine Kopplungsvorrichtung (Dockingaufnahme und Dockingeinschub) zwischen Fahrzeug und Anbaugerät bzw. Anhänger ein entsprechender Winkelsensor integriert. Dieser ist ausgebildet, um im Fahrbetrieb Steuersignale zum Steuern der hinteren Achsen bereitzustellen.

Erfindungsgemäß ist jedoch vorgesehen, dass der Winkelsensor in der Anhängerkupplung statt dem Winkelsensor der Masterachse ausgewählt werden kann, um die Achsen des Anhängers anzusteuern.

Somit wird automatisch ein Gleichstand mit der ersten Achse des Fahrzeuges und der lenkbaren Anhängerachse(n) hergestellt. Auf diese Weise ist es möglich, dass der Anhänger automatisch synchron mit der Masterachse mitgelenkt wird.

Weiterhin ist erfindungsgemäß ein Verfahren zum Lenken für ein 6x6-Fahrzeug mit zwei Hinterachsen und einem zweiachsigen Anhänger vorgesehen. Dies wird im Rahmen der vorliegenden Erfindung als ein Verfahren zum Lenken für ein 6x6-Fahrzeug mit zwei Hinterachsen und einem zweiachsigen Anhänger bezeichnet (Figur 6).

Das Verfahren zum Lenken erfolgt dabei entsprechend dem anhand des 4x4-Systems beschriebenen Prinzip.

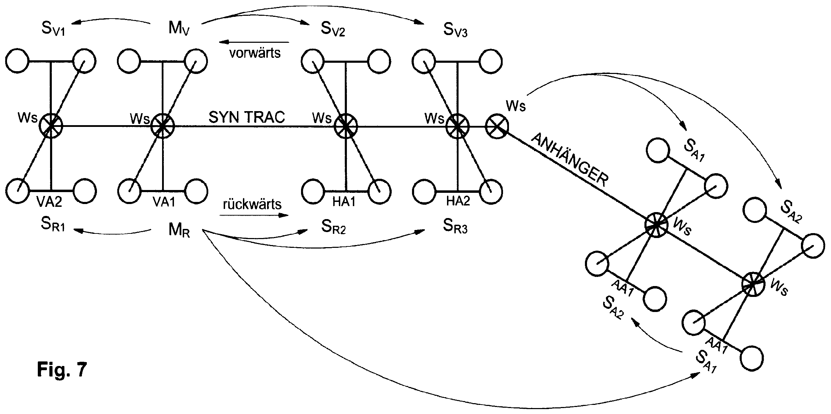

Weiterhin kann erfindungsgemäß auch ein Fahrzeug mit acht lenkbaren Achsen vorgesehen sein, das entsprechend einen zweiachsigen Anhänger zieht. Dies wird im Rahmen der vorliegenden Erfindung als ein Verfahren zum Lenken für ein 8x8-Fahrzeug mit einem zweiachsigen Anhänger bezeichnet (Figur 7).

Die vorstehend genannten Verfahren zum Lenken lassen sich darauf analog übertragen.

Zudem verwendet das Verfahren eine Software, die derart ausgebildet ist, dass sie immer anhand von entsprechenden Daten automatisch erkennt, wenn Achsen ab- bzw. angekoppelt werden. Dies erfolgt über zumindest eine entsprechende Datenleitung.

Auf diese Weise ist es möglich, die Lenkparameter immer auf die jeweilige Anbausituation anzupassen und diese optimal einzustellen.

### Bezugszeichenliste

Figur 1; Legende:
   - M_{V}: Master vorwärts
   - M_{R}: Master rückwärts
   - S_{V}: Slave vorwärts
   - S_{R}: Slave rückwärts
   - WS: Winkelsensor
   - VA: Vorderachse
   - HA: Hinterachse
Figur 2 + 3; Legende:
   - M_{V}: Master vorwärts
   - M_{R}: Master rückwärts
   - S_{V1}: Slave vorwärts 1
   - S_{V2}: Slave vorwärts 2
   - WS: Winkelsensor
   - S_{R1}: Slave rückwärts 1
   - S_{R2}: Slave rückwärts 2
   - VA: Vorderachse
   - HA1: Hinterachse 1
   - HA2: Hinterachse 2
Figur 4; Legende:
   - M_{V}: Master vorwärts
   - M_{R}: Master rückwärts
   - S_{V1}: Slave vorwärts 1
   - S_{V2}: Slave vorwärts 2
   - S_{V3}: Slave vorwärts 3
   - WS: Winkelsensor
   - S_{R1}: Slave rückwärts 1
   - S_{R2}: Slave rückwärts 2
   - S_{R3}: Slave rückwärts 3
   - VA1: Vorderachse 1

   - VA2: Vorderachse 2
   - HA1: Hinterachse 1
   - HA2: Hinterachse 2
Figur 5; Legende:
   - M_{V}: Master vorwärts
   - M_{R}: Master rückwärts
   - S_{V}: Slave vorwärts
   - S_{R}: Slave rückwärts
   - WS: Winkelsensor
   - VA: Vorderachse
   - HA: Hinterachse
   - S_{A1}: Slave Achse 1
   - S_{A2}: Slave Achse 2
   - AA1: Anhängerachse 1
   - AA2: Anhängerachse 2
Figur 6; Legende:
   - M_{V}: Master vorwärts
   - M_{R}: Master rückwärts
   - S_{V1}: Slave vorwärts 1
   - S_{V2}: Slave vorwärts 2
   - WS: Winkelsensor
   - S_{R1}: Slave rückwärts 1
   - S_{R2}: Slave rückwärts 2
   - VA: Vorderachse
   - HA1: Hinterachse 1
   - HA2: Hinterachse 2
   - S_{A1}: Slave Achse 1
   - S_{A2}: Slave Achse 2
   - AA1: Anhängerachse 1
   - AA2: Anhängerachse 2
Figur 7; Legende
   - M_{V}: Master vorwärts
   - M_{R}: Master rückwärts
   - S_{V1}: Slave vorwärts 1
   - S_{V2}: Slave vorwärts 2
   - S_{V3}: Slave vorwärts 3
   - WS: Winkelsensor
   - S_{R1}: Slave rückwärts 1
   - S_{R2}: Slave rückwärts 2
   - S_{R3}: Slave rückwärts 3
   - VA1: Vorderachse 1
   - VA2: Vorderachse 2
   - HA1: Hinterachse 1
   - HA2: Hinterachse 2
   - S_{A1}: Slave Achse 1
   - S_{A2}: Slave Achse 2
   - AA1: Anhängerachse 1
   - AA2: Anhängerachse 2

## Patentansprüche

1. Verfahren zum Lenken eines Fahrzeuges umfassend
zumindest zwei lenkbare Achsen VA1, HA1 mit je einem Winkelsensor, wobei eine Hinterachse HA1 in einem Allradlenkmodus synchron mit der Vorderachse VA1 gegenläufig mitgelenkt wird, wobei dies als 4x4 Lenksystem bezeichnet wird,
eine Steuereinrichtung zum Einstellen der Lenkwinkel der Achsen auf Basis der von den Winkelsensoren bereitgestellten Daten, **dadurch gekennzeichnet, dass**
eine zweite lenkbare Hinterachse HA2 eines Anbaugerätes und eine zweite lenkbare Vorderachse VA2 eines weiteren Anbaugerätes vorgesehen sind, welche jeweils mit dem Fahrzeug lösbar verbunden sind, welche jeweils einen Winkelsensor aufweisen, wobei,
wenn die zweite Hinterachse HA2 oder die zweite Hinterachse HA2 und die zweite Vorderachse VA2 angekoppelt sind, die zweite Vorderachse VA2 und die beiden Hinterachsen HA1 und HA2 der ersten Vorderachse VA1 nachgeführt werden, wobei die Steuereinrichtung auf Basis von Daten den 4X4 Modus oder den 6x6-Modus oder den 8x8-Modus erkennt und automatisch auf den Synchronisierungsmodus des 4x4- oder des 6x6- oder des 8x8-Lenksystems umstellt.

2. Verfahren gemäß Anspruch 1,
**dadurch gekennzeichnet,**
**dass** beim Ankoppeln der zweiten Vorderachse VA2 aus dem 6x6- automatisch ein 8x8-Lenksystem wird, sodass automatisch auf den Synchronisierungsmodus das 8x8 Lenksystems umgestellt wird,
und/oder
**dass** beim Abkoppeln der zweiten Vorderachse VA2 aus dem 8x8- automatisch ein 6x6-Lenksystem wird, sodass automatisch auf den Synchronisierungsmodus des erläuterten 6x6-Lenksystems umgestellt wird.

3. Verfahren gemäß einem der Ansprüche 1 oder 2, **dadurch gekennzeichnet,**
**dass** an das 4x4-Fahrzeug oder an das 6x6 Fahrzeug mit zwei Hinterachsen oder an das 8x8 Fahrzeug mit zwei Vorderachsen und mit zwei Hinterachsen ein zweiachsiger Anhänger mit zwei Achsen AA1 und AA2 angekoppelt ist, die ebenfalls lenkbar ausgebildet sind und einen Winkelsensor aufweisen, wobei in die Kopplungseinrichtung ein weiterer Winkelsensor integriert ist, der zum Bereitstellen von Steuersignalen zum Steuern der hinteren Achsen ausgebildet ist, wobei
der Winkelsensor in der Anhängerkupplung statt dem Winkelsensor der Vorderachse VA1 "oder einer Masterachse" ausgewählt wird, um die Achsen des Anhängers anzusteuern, so
**dass** automatisch ein Gleichstand mit der ersten Vorderachse VA1 des Fahrzeuges und der lenkbaren Anhängerachse(n) AA1 und AA2 hergestellt wird und so dass der Anhänger automatisch synchron mit der Vorderachse VA1 (Masterachse) mitgelenkt wird.

## Claims

1. Method for steering a vehicle comprising
at least two steerable axles VA1, HA1, each having an angle sensor, wherein in an all-wheel steering mode, a rear axle HA1 is synchronously steered with the front axle VA1 in the opposite direction, this being referred to as a 4x4 steering system;
a control device for adjusting the steering angles of the axles on the basis of the data provided by the angle sensors, **characterized in that**
a second steerable rear axle HA2 of an add-on attachment and a second steerable front axle VA2 of a further add-on attachment are provided, which are each detachably connected to the vehicle and which each have an angle sensor,
wherein when the second rear axle HA2 or the second rear axle HA2 and the second front axle VA2 are coupled, the second front axle VA2 and the two rear axles HA1 and HA2 of the first front axle VA1 are tracked, wherein on the basis of data the control device identifies the 4X4 mode or the 6x6 mode or the 8x8 mode and automatically switches to the synchronization mode of the 4x4 or the 6x6 or the 8x8 steering system.

2. Method according to Claim 1,
**characterized in that** when the second front axle VA2 is coupled, the 6x6 steering system automatically becomes an 8x8 steering system,
so that there is an automatic switchover to the synchronization mode of the 8x8 steering system, and/or
when the second front axle VA2 is uncoupled, the 8x8 steering system automatically becomes a 6x6 steering system,
so that there is an automatic switchover to the synchronization mode of the 6x6 steering system explained.

3. Method according to one of Claims 1 or 2,
**characterized in that**
a twin-axle trailer with two axles AA1 and AA2, which are also of steerable design and have an angle sensor, is coupled to the 4x4 vehicle or to the 6x6 vehicle with two rear axles or to the 8x8 vehicle with two front axles and with two rear axles, wherein in the coupling device is integrated a further angle sensor designed to provide control signals for controlling the rear axles, wherein the angle sensor in the trailer coupling instead of the angle sensor of the front axle VA1 "or of a master axle" is selected, in order to control the axles of the trailer,
such that parity is automatically established with the first front axle VA1 of the vehicle and the steerable trailer axle(s) AA1 and AA2, and such that the trailer is automatically synchronously steered with the front axle VA1 (master axle).

## Revendications

1. Procédé de conduite d'un véhicule comprenant
au moins deux essieux directeurs VA1, HA1 avec chacun un capteur d'angle, un essieu arrière HA1 étant codirigé en sens inverse de manière synchrone avec l'essieu avant VA1 dans un mode de direction à quatre roues motrices, ceci étant désigné comme système de direction 4x4,
un dispositif de commande pour régler les angles de braquage des essieux sur la base des données fournies par les capteurs d'angle, **caractérisé en ce que**
un deuxième essieu arrière directeur HA2 d'un outil porté et un deuxième essieu avant directeur VA2 d'un autre outil porté sont prévus, lesquels sont respectivement reliés de manière amovible au véhicule, lesquels présentent respectivement un capteur d'angle, où,
lorsque le deuxième essieu arrière HA2 ou le deuxième essieu arrière HA2 et le deuxième essieu avant VA2 sont couplés, le deuxième essieu avant VA2 et les deux essieux arrière HA1 et HA2 sont suivis par le premier essieu avant VA1, où
le dispositif de commande détecte le mode 4X4 ou le mode 6x6 ou le mode 8x8 sur la base de données et passe automatiquement au mode de synchronisation du système de direction 4x4 ou 6x6 ou 8x8.

2. Procédé selon la revendication 1,
**caractérisé en ce que**, lors de l'accouplement du deuxième essieu avant VA2, le système de direction 6x6 devient automatiquement un système de direction 8x8, de sorte que l'on passe automatiquement au mode de synchronisation du système de direction 8x8,
et/ou **en ce que**, lors du désaccouplement du deuxième essieu avant VA2, le système de direction 8x8 devient automatiquement un système de direction 6x6, de sorte que l'on passe automatiquement au mode de synchronisation du système de direction 6x6 expliqué.

3. Procédé selon l'une quelconque des revendications 1 ou 2,
**caractérisé en ce qu'**au véhicule 4x4 ou au véhicule 6x6 avec deux essieux arrière ou au véhicule 8x8 avec deux essieux avant et avec deux essieux arrière est couplée une remorque à deux essieux avec deux essieux AA1 et AA2, qui sont également conçus de manière dirigeable et présentent un capteur d'angle, un autre capteur d'angle étant intégré dans le dispositif de couplage, lequel est conçu pour fournir des signaux de commande pour commander les essieux arrière, où le capteur d'angle dans l'attelage de remorque est sélectionné au lieu du capteur d'angle de l'essieu avant VA1 « ou d'un essieu maître » pour commander les essieux de la remorque,
**en ce qu'**il est établi automatiquement une égalité avec le premier essieu avant VA1 du véhicule et le ou les essieux directeurs de remorque AA1 et AA2 et **en ce que** la remorque est ainsi automatiquement codirigée de manière synchrone avec l'essieu avant VA1 (essieu maître).
